# EUROPÄISCHE PATENTSCHRIFT

(11) **EP 1 894 265 B1**
(45) Veröffentlichungstag und Bekanntmachung des Hinweises auf die Patenterteilung: **29.10.2008**
(21) Anmeldenummer: 06742401.0
(22) Anmeldetag: 08.06.2006
(51) Int. Cl.: H01M 2/34

(54) **POLBRÜCKE FÜR EINE BATTERIE**
CELL CONNECTOR FOR A BATTERY
PONTET DE CONNEXION DESTINE A UNE BATTERIE

(30) Priorität: 16.06.2005 DE 102005028066
(43) Veröffentlichungstag der Anmeldung: 05.03.2008
(73) Patentinhaber: Exide Technologies GmbH, 63654 Büdingen (DE)
(72) Erfinder: HANSSON, Nils, 37412 Elbingeröde (DE); RADMANN, Detlev, 37431 Bad-Lauterberg (DE); HARALDSEN, Björn, Horten, Norwegen (NO)
(74) Vertreter: Demski, Siegfried
(86) Internationale Anmeldenummer: PCT/DE2006/000987
(87) Internationale Veröffentlichungsnummer: WO 2006/133674

(56) Entgegenhaltungen:
- EP-A2- 0 083 330
- DE-A1- 2 356 465

## Beschreibung

Die Erfindung betrifft eine Polbrücke für eine Batterie in Verbindung mit mindestens einem Dämpfungselement, insbesondere zum Absorbieren von auftretenden vertikalen Kräften infolge von Schockeinwirkungen, wobei die Polbrücke mit den positiven oder negativen Elektroden einenends verbunden ist, welche in einem Gehäuse mit Gehäusedeckel aufgenommen sind, und anderenends zumindest einen aus dem Gehäusedeckel herausragenden Polanschluss aufweist.

Gattungsgemäße Polbrücken für Batterien werden benötigt, um sämtliche positiven beziehungsweise negativen Elektroden untereinander zu verbinden und gleichzeitig die Möglichkeit zu schaffen, eine elektrische Kontaktierung außerhalb des Batteriegehäuses vorzunehmen. Hierzu wird sowohl eine positive als auch eine negative Polbrücke verwendet, die mit ihrem Polanschluss einen positiven und negativen Pol bildet.

Batterien werden überwiegend in Land- und Wasserfahrzeugen eingesetzt, wobei diese zum Starten eines Motors, als Energieversorgung oder als Energiequelle für einen elektrischen Antrieb vorgesehen sind. Je nach Verwendungszweck sind diese Batterien einer erheblichen mechanischen Belastung durch auftretende Stöße ausgesetzt. Dies kann beispielweise bei Fahrten durch unwegsames Gelände oder auch durch äußere Einwirkungen der Fall sein. Unter solchen äußeren Einwirkungen ist beispielweise bei militärischen Fahrzeugen, insbesondere Unterwasserfahrzeugen, auch die Belastung durch Explosionen unmittelbar in der Nähe des Fahrzeuges beziehungsweise Unterwasserfahrzeuges zu verstehen. Durch die ausgelösten Schockwellen kann sowohl ein Automobil als auch ein Unterwasserfahrzeug einer kurzen aber erheblichen stoßartigen Beschleunigung ausgesetzt werden. Bei Unterwasserfahrzeugen kann dies beispielweise durch Unterwasserbomben oder dergleichen ausgelöst werden, wodurch nicht nur lose Einrichtungsgegenstände eines Unterwasserfahrzeugs, sondern auch fest mit dem Unterwasserfahrzeug verbundene Komponenten, beispielweise Batterien, einer erheblichen Schockeinwirkung ausgesetzt sind. Dies führt beispielweise dazu, dass die in einem Gehäuse eingebauten Elektrodenplatten mit ihren Polbrücken, weil das Gehäuse in der Regel fest mit dem Unterwasserfahrzeug verbunden ist, einen Hub von mehreren Zentimetern ausführen. Dies bedeutet im Extremfall, dass die Elektrodenplatten innerhalb des Gehäusen sowohl nach unten als auch nach oben relativ zu dem Gehäuse bewegt werden und somit ebenso die Polanschlüsse eine Hubbewegung ausführen. Zur Dämpfung dieser Hubbewegung ist es bekannt, dünne gummielastische Scheiben zwischen den Polbrücken und dem Gehäusedeckel vorzusehen, um den auftretenden Stoß abzufedern. Des Weiteren sind Lösungen bekannt, bei denen harte spröde Materialien verwendet werden, die infolge des einwirkenden Druckes zerplatzen und somit eine Ausgleichsbewegung der Elektrodenplatten ermöglichen. Nachteilig ist bei dieser Ausführungsvariante, dass in der Regel nur eine einmalige Schockwirkung aufgefangen werden kann und im Wiederholungsfall die Elektrodenplatten ungedämpft innerhalb des Batteriegehäuses eine Hubbewegung ausführen können oder die Dämpfungswirkung nur sehr gering ist. Dies führt in der Regel zu erheblichen Beschädigungen des Batteriegehäuses und des Batteriedeckels und gegebenenfalls der Elektrodenplatten, sodass die Batterien unbrauchbar werden.

In der DE 23 56 465 A1 wird eine Dämpfung von Elektrodenplatten in einer Batterie gelehrt, welche durch eine elastische Aufhängung der Polbrücke im Gehäusedeckel erreicht wird. Hierzu wird der Polschaft zu beiden Seiten des Gehäusedeckels mit einem elastischen Element umgeben, wobei die beiden elastischen Elemente auf der Außen- und der Innenseite des Gehäusedeckels den Kraftschluss zwischen dem Gehäusedeckel und der Polbrücke herstellen. Diese Art der Aufhängung führt jedoch dazu, dass bei Schockeinwirkungen der Gehäusedeckel in direkter Umgebung des Polschaftes ausbricht oder dass sich die zylindrischen Dämpfungselemente bei Schockeinwirkung verformen, sodass eine mehrfache Schockeinwirkung nicht sicher gedämpft werden kann.

Des Weiteren ist in den bekannten Lösungen aus dem Stand der Technik vorgesehen, dass die Dämpfungselemente einen schmalen Kragen um die Polschäfte bilden, der sich gegen den Gehäusedeckel der Batterie abstützt. Trotz der Dämpfung sind die auftretenden Kräfte, die das Dämpfungselement bei Schockeinwirkungen überträgt, so hoch, dass der Gehäusedeckel im Bereich der Dämpfungselemente ausbricht.

Der Erfindung liegt die Aufgabe zugrunde, eine Lösung aufzuzeigen, die eine verbesserte Dämpfung der Elektrodenplatten ermöglicht und auch bei mehrmaligen Schockeinwirkungen die Dämpfungseigenschaften beibehält, ohne dass der Gehäusedeckel der Batterie bei starker Schockeinwirkung ausbricht.

Erfindungsgemäß ist zur Lösung der Aufgabe vorgesehen, dass der wenigstens eine Polanschluss mit einer einstückig angeformten Auflageschulter innerhalb des Gehäuses ausgestattet ist, wobei das mindestens eine Dämpfungselement so geformt ist, dass es mit einer kleineren Planfläche auf der Auflageschulter aufliegt und mit einer größeren Planfläche unterhalb des Gehäuseinnendeckel der Batterie anliegt. Weitere vorteilhafte Ausgestaltungen der Erfindung ergeben sich aus den Unteransprüchen.

Zur Dämpfung einer möglichen Hubbewegung der Elektrodenplatten innerhalb des Batteriegehäuses wird eine neue Polbrücke vorgeschlagen, welche eine einstückig angeformte Auflageschulter innerhalb des Gehäuses aufweist. Diese Auflageschulter dient in Verbindung mit mindestens einem Dämpfungselement dazu, auftretende vertikale Kräfte durch Schockeinwirkungen elastisch aufzunehmen, ohne dass die Elektrodenplatten beschädigt werden. Durch die Auflageschulter wird hierbei eine Abstützfläche geschaffen, auf welche das mindestens eine Dämpfungselement aufliegt und somit auftretende vertikale Kräfte, beispielweise durch einen Stoß großflächig in das mindestens eine Dämpfungselement einleiten kann. Hierzu ist das mindestens eine Dämpfungselement lose auf den Polanschluss aufschiebbar ausgebildet und innerhalb des Gehäuses angeordnet, wobei das mindestens eine Dämpfungselement einenends auf der Auflageschulter aufliegt und anderenends unterhalb des Gehäusedeckels anliegt, welcher mit dem Gehäuse verbunden ist. Gehäuse und Gehäusedeckel werden in bekannter Weise aus einem GFK-Material gefertigt und auf ihrer Innenseite mit einer Gummibeschichtung versehen, damit die in dem Gehäuse vorhandene Batteriesäure das GFK-Gehäuse beziehungsweise den GFK-Deckel nicht zerstören kann. Im Übergangsbereich zwischen Gehäuse und Gehäusedeckel erfolgt hierbei zusätzlich eine Verbindung des Gehäuseinnendeckels mit der Gehäuseinnenwandung durch, Kleben, Vulkanisieren oder andere vergleichbare Verbindungstechniken.

Die Auflageschulter des Polanschlusses ist hierbei großflächig dimensioniert und das mindestens eine Dämpfungselement besitzt eine annähernd gleichgroße Planfläche, damit dieses vollständig auf der Auflageschulter zu liegen kommt, um die auftretenden Druckkräfte möglichst großflächig einzuleiten. Die Form des mindestens einen Dämpfungselementes und ebenso der Auflageschulter kann hierbei frei gewählt werden und beispielweise rund, oval oder mehreckig, insbesondere quadratisch ausgeführt sein.

Das mindestens eine Dämpfungselement weist ferner eine zweite Planfläche auf, die unmittelbar unterhalb des Gehäuseinnendeckels anliegt, wobei in besonderer vorteilhafter Ausführung das mindestens eine Dämpfungselement nach unten in Richtung auf die Polbrücke konisch verjüngt ausgeführt ist. Durch diese Maßnahme wird erreicht, dass einerseits eine großflächige Einleitung des auftretenden Druckes in den Gehäusedeckel erfolgt und andererseits wird durch die konische Ausformung verhindert, dass sich das mindestens eine Dämpfungselement zu sehr verformt und beispielweise zu einer Ausbeulung im mittleren Bereich führt. Durch die großflächige Einleitung der Kräfte auf dem Batteriegehäusedeckel wird erreicht, dass die Flächenbelastung auf das Material des Batteriedeckels bei Schockeinwirkungen gering gehalten wird und in Folge davon bricht der Batteriedeckel nicht aus.

In weiterer Ausgestaltung der Erfindung ist vorgesehen, dass das mindestens eine Dämpfungselement aus einem elastischen Kautschukmaterial, vorzugsweise Butyl-kautschuk besteht, welcher eine erforderliche Formstabilität besitzt und auftretende Druckkräfte in Wärmeenergie umsetzt. Hierdurch wird eine erhöhte Dämpfungswirkung erzielt, weil ein größerer Prozentsatz der auftretenden kinetischen Energie absorbiert werden kann.

In weiterer Ausgestaltung der Erfindung ist vorgesehen, dass die obere Anlagefläche des mindestens einen Dämpfungselementes eine Ausnehmung aufweist, in welche ein Vorsprung des Gehäusedeckels, welcher vorzugsweise aus einem Gehäusedeckel mit einem innen liegenden aus Gummi bestehenden Innendeckel besteht, hineinragt. Hierdurch wird die Montage erleichtert und ferner eine verbesserte Führung der Polanschlüsse erzielt.

Zum Ausgleich der unterschiedlichen Ausdehnungsquofizienten einerseits der Polbrücke und andererseits des mindestens einen Dämpfungselements ist in vorteilhafter Weise zwischen beiden ein Dichtelement angeordnet, wobei die Auflageschulter eine Ausnehmung für die Dichtscheibe aufweisen kann. Um eine Dichtungswirkung zu erhöhen, können die parallelen Dichtflächen des mindestens einen Dämpfungselementes und des Dichtelementes zumindest teilweise mit Silikonfett eingefettet sein.

Das mindestens eine verwendete Dämpfungselement kann hierbei eine Höhe von 40 bis 80 mm, vorzugsweise 60 mm aufweisen und eine erste Auflagefläche von 3.000 bis 4.000 mm², vorzugsweise 3.600 mm² und eine zweite Auflagefläche von 5.000 bis 7.000 mm², vorzugsweise 5.800 mm² aufweisen. Durch die Auflageflächen wird sichergestellt, dass eine optimale Einleitung der auftretenden Druckkräfte in das mindestens eine Dämpfungselement erfolgt, wobei durch die Höhe des mindestens einen Dämpfungselements eine elastische Hubbewegung der Elektrodenplatten auch über eine größere Wegstrecke möglich ist. Die Elektrodenplatten selbst sind gegenüber dem Boden des Batteriegehäuses durch weitere Dämpfungsstreifen abgestützt, die eine Dicke von 40 bis 50 mm aufweisen, sodass die Elektrodenplatten sowohl nach unten als auch nach oben dämpfend abgefedert werden.

In weiterer besonderer Ausgestaltung ist vorgesehen, dass der Gehäusedeckel auf der Außenseite eine Ausnehmung für einen Dichtungsring aufweist, welcher scheibenförmig in der Ausnehmung einliegt und durch welchen hindurch der Polanschluss nach außen ragt, wobei eine Metallscheibe auf dem Dämpfungsring aufliegt und mittels Bolzen, welche in vorhandene Nuten des Polanschlusses einliegen, verspannt ist. Während das mindestens eine Dämpfungselement dazu dient, eine Hubbewegung des Elektrodenstapels nach oben gegen den Gehäusedeckel abzufedern, ist der Dichtungsring zur Abfederung des Elektrodenstapels nach unten vorgesehen und somit als äußeres Dämpfungselement bezeichnet werden kann, wobei dieses mit den Dämpfungsstreifen im Bodenbereich zusammenwirkt, um den Elektrodenstapel federnd aufzufangen. Der Dichtungsring weist hierbei eine Höhe von cirka 25 bis 40 mm, vorzugsweise 30 mm auf, bei einem Durchmesser von 50 bis 70 mm, vorzugsweise 60 mm. In vorteilhafter Weise liegt der Dichtungsring in einer Ausnehmung des Gehäusedeckel ein, um die Bauhöhe der Batterie nicht zu erhöhen oder den Innenraum der Batterie zu verkleinern.

Üblicherweise besteht der Polanschluss aus Kupfer, um eine hohe verlustfreie Stromzufuhr und -abfuhr zu gewährleisten. Die einstückig an den Polanschluss angeformte Auflageschulter besteht im erfindungsgemäßen Polbrücke ebenfalls aus Kupfer, wodurch eine hohe Formstabilität erzielt wird und somit die Kräfte optimal in das mindestens eine Dämpfungselement eingeleitet werden können. Zum Schutz vor Zerstörung durch die vorhandene Säure ist die Auflageschulter mit Blei ummantelt, wobei der Polanschluss zumindest teilweise, vorzugsweise bis zur Höhe des Gehäusedeckels ebenfalls mit Blei ummantelt ist, damit selbst Spritzer der Säure aufgrund von Schaukelbewegungen den Polanschluss beziehungsweise die Polbrücke nicht zerstören können. Ebenso wird verhindert, dass an der Polbrücke und dem Polanschluss hoch kriechende Säure Beschädigungen verursachen kann. Als zusätzliche Abdichtungsmaßnahme ist das Silikonfett und die Dichtscheibe vorgesehen, welche sich unterhalb des mindestens einen Dämpfungselementes befindet, während im oberen Bereich das mindestens eine Dämpfungselement unmittelbar an dem Gehäusedeckel anliegt, welcher beispielweise aus Gummi oder Kautschuk besteht und zusätzlich die Möglichkeit bietet, dass das mindestens eine Dämpfungselement mit dem Gehäuseinnendeckel abdichtend verbunden werden kann, zum Beispiel durch Vulkanisieren. Der Gehäusedeckel und das Gehäuse selbst sind in derart miteinander verbunden, dass eine Trennung beider Teile nur unter großer Krafteinwirkung erfolgen kann, wodurch in der Regel eine Zerstörung des Batteriegehäuses verbunden ist.

Der wesentliche Erfindungsgedanke der Erfindung liegt darin, durch eine verstärkte Polbrücke mit einer einstückig angeformten Auflageschulter und mindestens einem großflächig dimensionierten Dämpfungselement auftretende Stöße durch Schockeinwirkung aufzufangen und somit eine Hubbewegung der Elektrodenplatten zu dämpfen, wobei bevorzugt auf elastische Materialien zurückgegriffen wird, die mehrmalige Schockeinwirkungen ohne dauerhafte Verformung auffangen können. Dabei ist vorgesehen, dass durch das mindestens eine, großflächig dimensionierte Dämpfungselement die Kräfte, die durch das Dämpfungselement auf den Gehäuseinnendeckel übertragen werden, so weit verteilt werden, dass der Gehäusedeckel bei Schockeinwirkung nicht ausbricht.

Die Erfindung wird im Weiteren anhand der Figuren näher erläutert.

Es zeigen
- Fig. 1: in zwei geschnittenen Seitenansichten einen oberen Batterieabschluss,
- Fig. 2: in drei Ansichten eine erfindungsgemäße Polbrücke,
- Fig. 3: in zwei Ansichten ein erfindungsgemäßes Dämpfungselement,
- Fig. 4: in zwei Ansichten ein Dichtelement,
- Fig. 5: in drei Ansichten den Gehäusedeckel,
- Fig. 6: in drei Ansichten den Gehäuseinnendeckel und
- Fig. 7: in zwei Ansichten ein erfindungsgemäßes Dichtungselement.

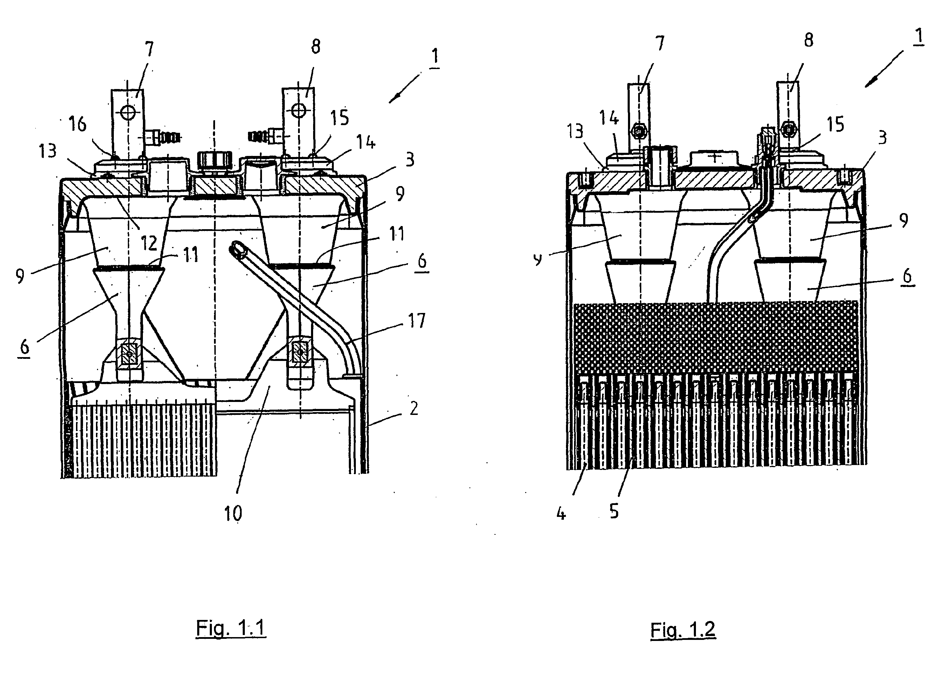

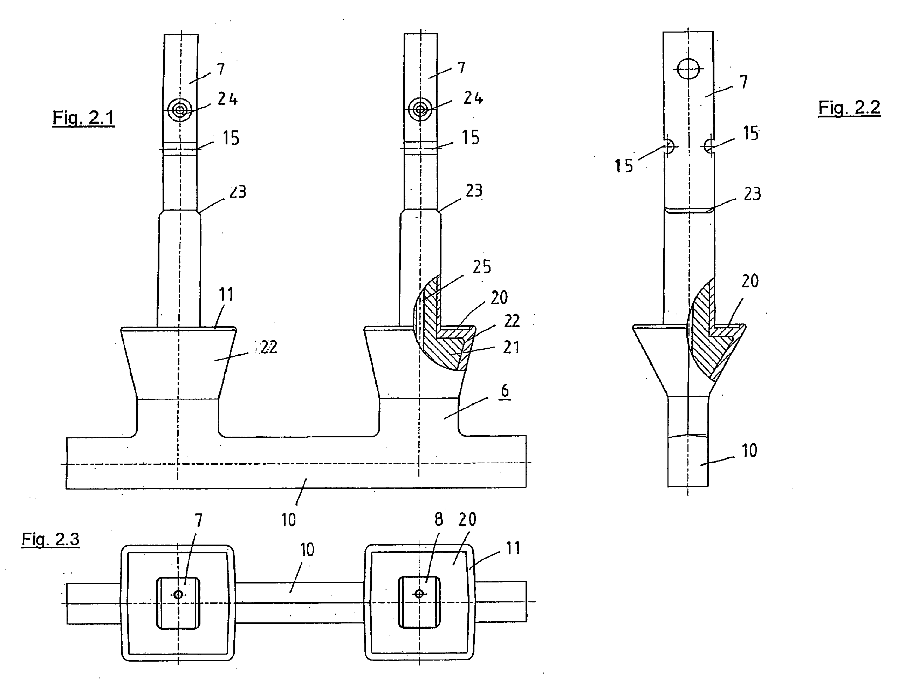

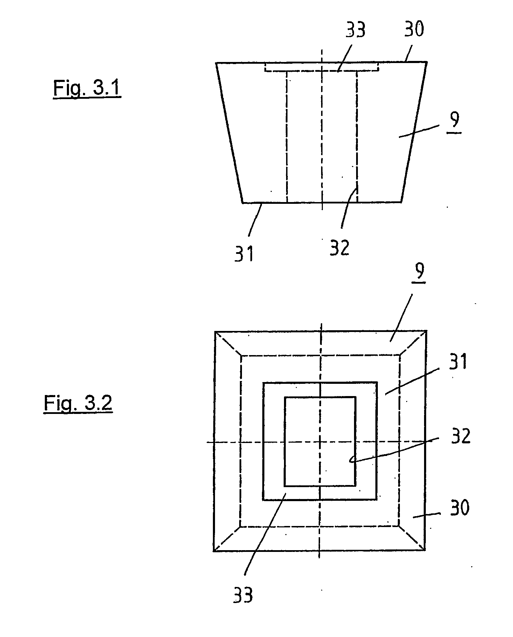

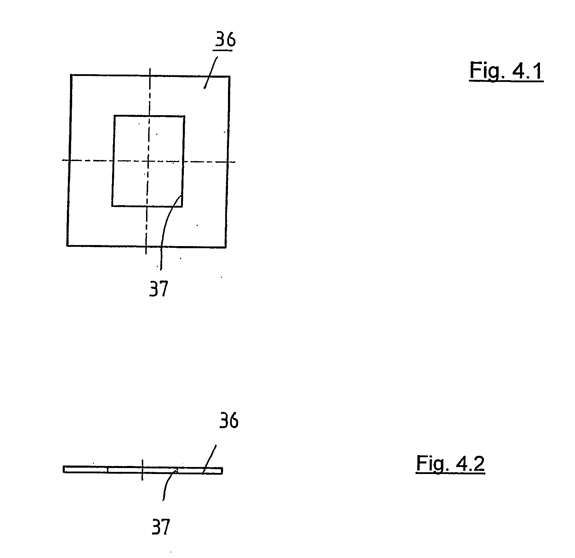

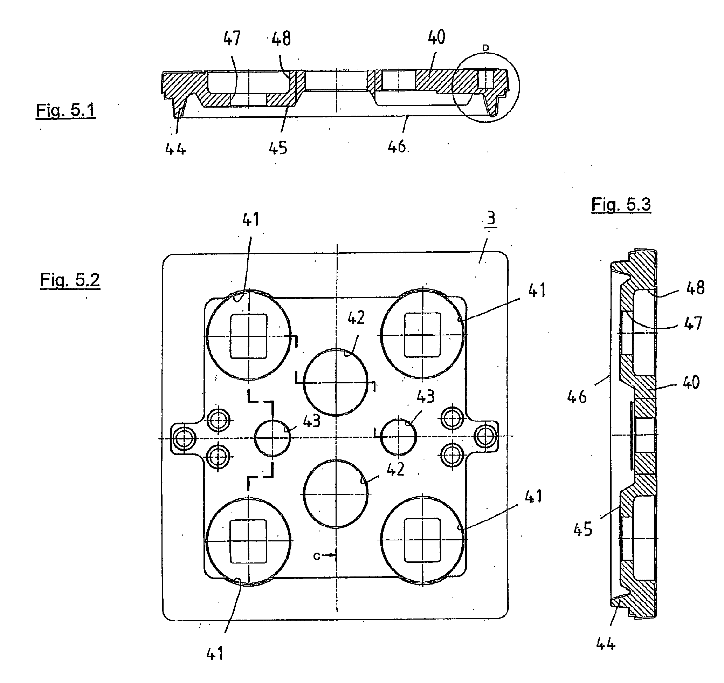

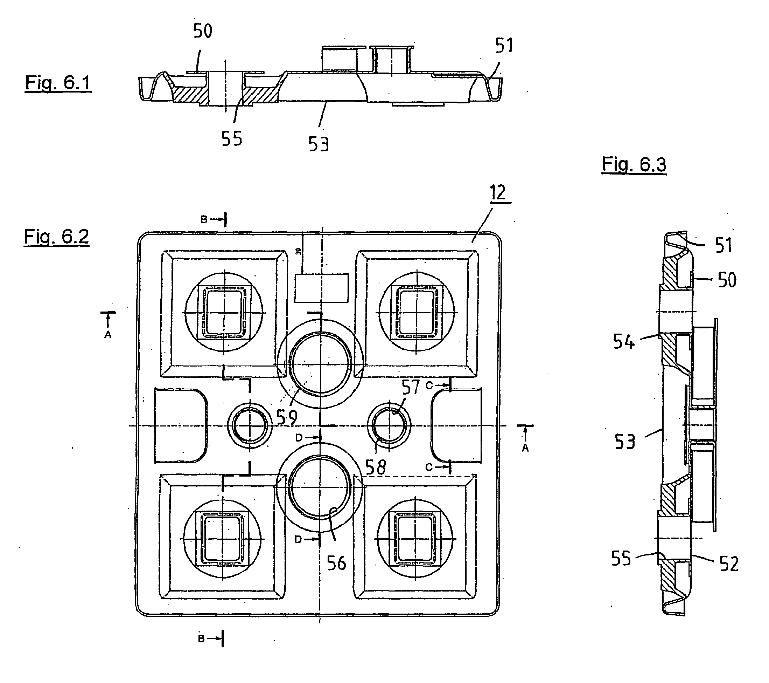

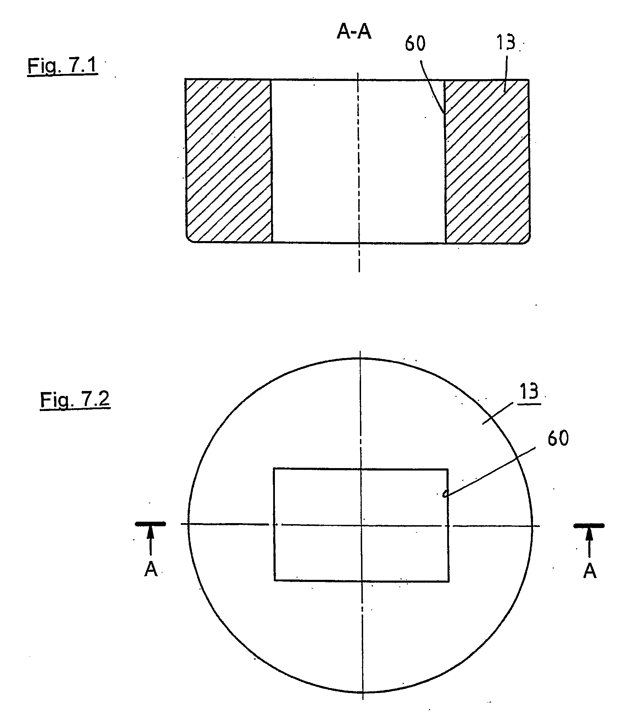

Figur 1.1 und 1.2 zeigen in zwei geschnittenen Ansichten den oberen Abschnitt eines Akkumulators 1, bestehend aus Gehäusewand 2, Gehäusedeckel 3 und innenliegenden positiven und negativen Elektrodenplatten 4, 5 sowie einer Polbrücke 6, welche die Elektrodenplatten 4, 5 untereinander verbindet, und zwar jeweils die positiven und negativen Elektrodenplatten 4, 5. Über einen Polanschluss 7, 8, welcher aus dem oberen Gehäusedeckel 3 herausragt und zum Anschluss des Akkumulators 1 vorgesehen ist, kann der Akkumulator angeschlossen werden. Die Polbrücke 6 ist im Detail aus den Figuren 2.1, 2.2 und 2.3 ersichtlich und ein erfindungsgemäßes Dämpfungselement 9 aus den Figuren 3.1 und 3.2. Ein zwischen dem Dämpfungselement 9 und der Polbrücke 6 liegendes Dichtelement ist aus den Figuren 4.1 und 4.2, der Gehäusedeckel aus den Figuren 5.1, 5.2 und 5.3 und der Gehäuseinnendeckel aus den Figuren 6.1, 6.2 und 6.3 sowie ein Dichtungsring oberhalb des Gehäusedeckels aus den Figuren 7.1 und 7.2 ersichtlich.

Das Gehäuse 2 des Akkumulators 1 besteht in der Regel aus GFK und wird mit einer Gummibeschichtung auf der Innenseite versehen, damit nach dem Befüllen mit Säure das Gehäuse 2 sowie der Gehäusedeckel 3 vor Beschädigungen infolge von Säureeinwirkung geschützt ist. Im gezeigten Ausführungsbeispiel besteht der Gehäusedeckel 3 aus einem äußeren Deckel 3 aus GFK und einem Gehäuseinnendeckel 12 der in der Regel aus Gummi oder einem gummiähnlichen Material gefertigt wird und mit der Innenwandung des Gehäuses 2 nach der Montage verklebt oder vulkanisiert wird. Oberhalb der Elektrodenplatten 4, 5 ist die Polbrücke 6 angeordnet, welche auf der der Elektrodenplatten 4, 5 zugewandten Seite ein brückenähnliches Verbindungselement 10 aufweist, um eine Kontaktierung der positiven beziehungsweise negativen Elektrodenplatten 4, 5 zu ermöglichen. Oberhalb der Elektrodenplatten 4, 5 ist die Polbrücke 6 trapezförmig verbreitert, sodass eine Auflageschulter 11 entsteht. Auf der Auflageschulter 11 ruht das erfindungsgemäße Dämpfungselement 9, welches einenends auf der Auflageschulter 11 aufliegt und anderenends unterhalb des Gehäuseinnendeckels 12 anliegt. Die Polbrücke 6 selbst ragt durch den Gehäusedeckel 3 und Gehäuseinnendeckel 12 nach oben aus dem Gehäuse 2 mit dem jeweiligen Polanschluss 7, 8 heraus. Damit die Polbrücke 6 dämpfend gegenüber dem Gehäusedeckel 3 abgestützt ist, erfolgt die Montage des erfindungsgemäßen Dämpfungselements 9 unterhalb des Gehäusedeckels 3 und Gehäuseinnendeckels 12. Im Weiteren wird auf den Polanschluss 7, 8 ein Dichtungsring 13 von außen aufgeschoben, der unmittelbar in einer Mulde des Gehäusedeckels 3 zu liegen kommt und durch eine Stahlscheibe 14 abgedeckt wird. Zum Verspannen des unteren Dämpfungselements 9 mit dem Dichtungsring 13, wobei zwischen Dichtungsring 13 und Dämpfungselement 9 der innere 12 und äußere Gehäusedeckel 3 zu liegen kommt, wird während der Montage der Dichtungsring 13 und das Dämpfungselement 9 soweit zusammengepresst, dass zwei seitliche Einkerbungen 15 des Polanschlusses 7, 8 freigegeben werden, um einen Sicherungsstift 16 beidseitig des Polanschlusses 7, 8 einzulegen. Der Sicherungsstift 16 ruht in einer Mulde der Stahlscheibe 14 und wird nach dem Lösen der Montagespannung in die Mulde der Stahlscheibe 14 gepresst, sodass der Gehäuseinnendeckel 12 und Gehäusedeckel 3 zwischen dem Dämpfungselement 9 und dem Dichtungsring 13 verpresst ist. In den Gehäusedeckel sind weitere Ausnehmungen vorgesehen, die beispielweise zur Kontrolle oder Anzeige des Säurestandes dienen oder eine Zuführung von Luft zur Umwälzung des Elektrolyten ermöglichen. Die Zuführung der Luft erfolgt beispielweise über einen Schlauch 17 der in der linken und rechten Figurenhälfte dargestellt ist.

Figuren 2.1, 2.2 und 2.3 zeigen in drei Ansichten die erfindungsgemäße Polbrücke 6 mit einem unteren brückenartigen Verbindungselement 10, welches gleichzeitig zum Verbinden der positiven beziehungsweise negativen Elektrodenplatten vorgesehen ist. Oberhalb des Verbindungselements 10 ist in dem gezeigten Ausführungsbeispiel die Polbrücke 6 trapezförmig nach oben verbreitert und führt zu einer quadratischen Auflageschulter 11. Anstelle einer quadratischen kann auch eine ovale, runde oder mehreckig geformte Auflageschulter 11 ausgebildet sein. In der Anlagefläche der Auflageschulter 11 ist eine Ausnehmung 20 eingelassen, sodass eine Dichtscheibe zwischen der Auflageschulter 11 der Polbrücke 6 und dem hier aufschiebbaren, aber nicht dargestellten Dämpfungselement 9 zu liegen kommt. Oberhalb der Auflageschulter 11 geht die Polbrücke 6 in einen rechteckförmigen oder gegebenenfalls quadratischen Polanschluss 7, 8 über. Wie aus der geschnittenen Teilansicht ersichtlich, besteht die Polbrücke 6 aus einem inneren Kern 21 und einer äußeren Hülle 22. Der Kern 21 besteht aus Kupfer, während die Hülle 22 als Bleimantel ausgeformt ist, damit das Kupfer vor dem Elektrolyten geschützt ist. Hierzu wird das brückenartige Verbindungselement 10, die Polbrücke 6 mit Auflageschulter 11 und die Polanschlüsse 7, 8 bis in Höhe des Gehäusedeckels 3 mit Blei ummantelt. Der nicht dargestellte Gehäusedeckel ist in etwa bis zur Höhe des vorhandenen Absatzes 23 auf die Polanschlüsse 7, 8, während der Montage aufschiebbar. Oberhalb des Gehäusedeckel ragt die Polbrücke 6 mit ihren Polanschlüssen 7, 8 ohne Bleiummantelung aus dem Gehäusedeckel 3 heraus. Zur Verspannung des Dämpfungselements und der oberen Dichtungsscheibe sind, wie bereits zu den Figuren 1.1 und 1.2 erläutert, Sicherungsstifte vorgesehen, die jeweils in einer Einkerbung 15 des Polanschlusses 7, 8 zu liegen kommen. Eine seitliche Bohrung 24 in den Polanschlüssen 7, 8 dient über einen Strömungskanal 25 zur Kühlung der Polbrücke 6 mit Wasser, welches über eine Bohrung 24 eingeleitet und über den Strömungskanal 25 zur zweiten Bohrung 24 geleitet wird, sodass eine Wasserzirkulation ermöglicht wird.

Figuren 3.1 und 3.2 zeigen in zwei Ansichten das erfindungsgemäße Dämpfungselement 9, welches im gezeigten Ausführungsbeispiel zwei quadratische Planflächen 30, 31 aufweist und einen Durchbruch 32 besitzt, der in einer Ausnehmung 33 mündet. Das Dämpfungselement 9 liegt mit der kleineren Planfläche 31 auf der Auflageschulter 11 der Polbrücke 6 nach der Montage auf, wobei ein Dichtelement in die Ausnehmung 20 eingelegt wird. Die weitere Planfläche 31 liegt unmittelbar an dem Gehäuseinnendeckel 12 an, wobei ein hervorstehender Teilbereich des Gehäuseinnendeckels 12 in die Ausnehmung 33 hineinragt, sodass das Dämpfungselement passgenau an dem gummielastischen Gehäuseinnendeckel 12 anliegt. Sämtliche Kontaktflächen des Dämpfungselements 9 und der Dichtscheibe sowie des Gehäuseinnendeckels 12 können zusätzlich mit einem Silikonfett bestrichen sein, um die Abdichtungseigenschaft zu erhöhen. In dem Durchbruch 32 wird der obere Teil der Polbrücke, und zwar Polanschluss 7 beziehungsweise 8 aufgenommen, dass heißt, das Dämpfungselement 9 wird auf den Polanschluss 7, 8 soweit aufgeschoben bis die Planfläche 31 auf der Auflageschulter 11 zu liegen kommt.

Figuren 4.1 und 4.2 zeigen in zwei Ansichten eine Dichtscheibe 35, die im gezeigten Ausführungsbeispiel quadratisch ausgebildet ist und in der Ausnehmung 20 der Polbrücke 6 zu liegen kommt. Aus diesem Grunde besitzt die Dichtscheibe 36 eine Ausnehmung 37, sodass die Dichtscheibe 36 über den Polanschluss 7, 8 aufgeschoben und auf der Auflageschulter 11 zu liegen kommt. Entsprechend der Form der Auflageschulter 11 der Polbrücke 6 kann die Dichtscheibe 36 von der gezeigten Ausführungsform abweichen, dass heißt es kann ebenso eine rechteckig, ovale, runde oder mehreckige Form zum Einsatz kommen.

Figuren 5.1, 5.2 und 5.3 zeigen den Gehäusedeckel 3 in drei Ansichten, wobei zwei Ansichten geschnitten dargestellt sind. Der Gehäusedeckel 3 ist im gezeigten Ausführungsbeispiel rechteckförmig ausgebildet und besteht aus einem Grundkörper 40 der vier symmetrische Durchbrüche 41 zur Aufnahme der Polanschlüsse aufweist sowie mit weiteren Bohrungen und Durchbrüchen 42, 43 versehen ist, die zum Teil zum Anschluss der Belüftung des Innenraums vorgesehen sind oder zur Aufnahme von Verschlussstopfen oder Kontrollanzeigeeinrichtungen für den Säurestand dienen. Auf der Unterseite des Gehäusedeckels 3 befindet sich ein umlaufender Rand 44, der bündig in einer Ausnehmung des Gehäuseinnendeckels 12 zu liegen kommt. Des Weiteren ist der Gehäusedeckel 3 auf der Unterseite mit einer stufenförmigen Kontur 45 versehen, die vier Planflächen 46 aufweist, an denen ebenso ausgebildete Planflächen des Gehäuseinnendeckels 12 zu liegen kommen, um die auftretenden Kräfte, welche über das Dämpfungselement auf den Gehäusedeckel einwirkt großflächig in diesen einzuleiten. Durch einen Durchbruch 47 gelangen die Polanschlüsse 7, 8 nach oben aus dem Gehäusedeckel 3, wobei die Durchbrüche 47 auf der Außenseite in eine größere Ausnehmung 48 übergehen, in die ein Dichtring eingelegt wird.

Figuren 6.1, 6.2 und 6.3 zeigen den Gehäuseinnendeckel 12, welcher aus einem gummielastischen Material besteht. Die obere Kontur 50 des Innendeckels 12 ist weitestgehend an die Kontur 45 des Gehäusedeckels 3 angepasst. In einer Mulde 51 wird beispielweise der Rand 44 des Gehäusedeckels 3 aufgenommen, während einstückig angeformte rohrförmige Wandungen 52 in den Durchbruch 47 des Gehäusedeckels 3 hineinragen und eingepresst werden, sodass nicht nur die Unterseite des Gehäusedeckels 3, sondern auch die vorhandenen Durchbrüche mit gummielastischen Material bedeckt sind. Auf der Unterseite 53 des Innendeckels 12 sind vier einstückig angeformte Vorsprünge 54 vorgesehen, welche in die korrespondierende Ausnehmung 33 des Dämpfungselementes 9 hineinragen und somit eine sichere Fixierung des Dämpfungselementes 9 gegenüber dem Gehäuseinnendeckel 12 ermöglichen und ein späteres Verrutschen des Dämpfungselements 9 verhindern. Hierbei ist ferner zu berücksichtigen, dass die Polanschlüsse 7, 8 durch den mittleren Durchbruch 55 hindurch nach außen ragen und somit eine passgenaue Anordnung von Polbrücke 6 mit Dämpfungselement 9, Gehäuseinnendeckel 12 und Gehäusedeckel 3 gewährleisten. Weitere vorhandene Durchbrüche 56 beziehungsweise 57 mit teilweise kragenförmigen Ausstülpungen 58, 59 ragen ebenfalls in die vorhandenen Durchbrüche 42, 43 des Gehäusedeckels 3 hinein und gewährleisten eine vollständige Ummantelung des Gehäusedeckel 3 von der Innenseite her.

Figuren 7.1 und 7.2 zeigen einen Dichtungsring 13, wie er in der Ausnehmung 48 des Gehäusedeckels 3 zu liegen kommt. Der Dichtungsring 13 weist einen rechteckförmigen Durchbruch 60 auf, durch den der Polanschluss 7, 8 der Polbrücke 6 aus dem Gehäuse 2 herausragt. Im gezeigten Ausführungsbeispiel ist der Dichtungsring 13 rund ausgeführt. Es besteht ohne Weiteres die Möglichkeit einer entsprechenden Veränderung der Ausnehmung 48 in dem Gehäusedeckel 3 vorzunehmen und eine andere Form des Dichtungselements zu wählen.

In der vorliegenden Erfindung wird mit Hilfe der neu entwickelten Polbrücke 6 eine Dämpfung der Elektrodenplatten 4, 5 dadurch erzielt, dass die Polbrücke 6 mit einer großflächig dimensionierten Auflageschulter 11 die Kräfte in ein vorhandenes elastisches Dämpfungselement 9 einleitet. Das Dämpfungselement 9 liegt einenends unmittelbar auf der Auflageschulter 11 der Polbrücke 6 oder auf einem Dichtelement auf, während es anderenends unterhalb des Gehäuseinnendeckels 12 anliegt. Durch das Dämpfungselement 9, den Gehäuseinnendeckel 12 und den äußeren Gehäusedeckel 3 hindurch ragt der jeweilige Polanschluss 7, 8 der Polbrücke 6 aus dem Gehäuse 2 und ermöglicht den Anschluss der Batterie zur Versorgung eines Gerätes oder eines Antriebsmotors mit elektrischer Energie. In vorteilhafter Weise werden mehrere Akkumulatoren 1 zu größeren Einheiten verbunden, um entweder eine Spannungserhöhung zu erreichen oder eine höhere Stromleistung zu erzielen. Um eine ausreichende Dämpfungswirkung der erfindungsgemäßen Anordnung zu erzielen, ist im Weiteren der Gehäusedeckel 3 beziehungsweise Gehäuseinnendeckel 12 zwischen dem inneren Dämpfungselement 9 und einem äußeren Dichtungsring 13 verspannt. Die Verspannung wird dadurch erzeugt, dass bei der Montage die beiden elastischen Elemente zusammengedrückt werden und eine auf dem äußeren Dichtungsring aufliegende Stahlscheibe mittels zweier Sicherungsstifte 16 an den jeweiligen Polanschlüssen 7, 8 festgelegt wird. Die Sicherungsstifte 16 liegen hierbei in einer vorhandenen Mulde der Stahlscheibe und in einer Einkerbung 15 des Polanschlusse 7, 8 ein.

Im Falle einer auftretenden Schockbelastung des Akkumulators mit vorzugsweise vertikalen Kräften wird somit die Bewegung des Elektrodenplatte 4, 5 innerhalb des Gehäuses 2 aufgrund der vorhandenen Dämpfungselement 9 soweit abgebremst, dass nur eine geringe Relativbewegung gegenüber dem Gehäuse stattfindet. Hierzu ist es erforderlich, dass die auftretenden Kräfte über eine großdimensionierte Auflageschulter 11 der Polbrücke 6 zunächst in das Dämpfungselement 9 eingeleitet werden und dieses wiederum über eine ebenfalls großzügig bemessene Auflagefläche gegenüber dem Gehäusedeckel 3 beziehungsweise Gehäuseinnendeckel 12 abgestützt ist. Durch die großflächige Krafteinleitung in den Gehäusedeckel wird verhindert, dass der Gehäusedeckel bei Schockeinwirkungen ausbricht. Durch die Auswahl eines entsprechenden Kunststoffmaterials wird eine Verformung des Dämpfungselements 9 nur in gewissen Grenzen zugelassen und insbesondere die auftretende kinetische Energie in Wärme umgewandelt. Der besondere Vorteil dieser Anordnung besteht darin, dass die Polbrücke 6 mit dem Dämpfungselement 9 nicht nur einen, sondern mehrere Stöße, ausgelöst durch Schockeinwirkung, abfedern kann. Hierzu dient im Weiteren ein unterhalb der Elektroden 4, 5 angeordneter Dämpfungsstreifen, die die Elektroden gegenüber dem Gehäuseboden in bekannter Weise abfedert.

### Bezugszeichenliste

- 1: Akkumulator
- 2: Gehäusewand
- 3: Gehäusedeckel
- 4: Elektrodenplatte
- 5: Elektrodenplatte
- 6: Polbrücke
- 7: Polanschluss
- 8: Polanschluss
- 9: Dämpfungselement
- 10: Verbindungselement
- 11: Auflageschulter
- 12: Gehäuseinnendeckel
- 13: Dichtungsring
- 14: Stahlscheibe
- 15: Einkerbung
- 16: Sicherungsstift
- 17: Schlauch
- 20: Ausnehmung
- 21: Kern
- 22: Hülle
- 23: Absatz
- 24: Bohrung
- 25: Strömungskanal/Kühlungskanal
- 30: Planfläche
- 31: Planfläche
- 32: Durchbruch
- 33: Ausnehmung
- 35: Dichtscheibe
- 36: Dichtscheibe
- 37: Ausnehmung
- 40: Grundkörper
- 41: Durchbruch
- 42: Durchbruch
- 43: Durchbruch
- 44: Rand
- 45: Kontur
- 46: Planfläche
- 47: Durchbruch
- 48: Ausnehmung
- 50: Kontur
- 51: Mulde
- 52: Wandung
- 53: Unterseite
- 54: Vorsprung
- 55: Durchbruch
- 56: Durchbruch
- 57: Durchbruch
- 58: Ausstülpung
- 59: Ausstülpung
- 60: Durchbruch

## Patentansprüche

1. Polbrücke (6) für eine Batterie in Verbindung mit mindestens einem Dämpfungselement (9, 13), insbesondere zum Absorbieren von auftretenden vertikalen Kräften infolge von Schockeinwirkungen, wobei die Polbrücke (6) mit den positiven oder negativen Elektroden (4, 5) einenends verbunden ist, welche in einem Gehäuse (2) mit Gehäusedeckel (3) aufgenommen sind, und anderenends zumindest einen aus dem Gehäusedeckel (3) herausragenden Polanschluss (7, 8) aufweist,
**dadurch gekennzeichnet,**
**dass** der wenigstens eine Polanschluss (7, 8) mit einer einstückig angeformten Auflageschulter (11) innerhalb des Gehäuses (2) ausgestattet ist, wobei das mindestens eine Dämpfungselement (9) so geformt ist, dass es mit einer kleineren Planfläche (31) auf der Auflageschulter (11) aufliegt und mit einer größeren Planfläche (30) unterhalb des Gehäuseinnendeckel (12) der Batterie anliegt.

2. Polbrücke (6) in Verbindung mit mindestens einem Dämpfungselement (9, 13) nach Anspruch 1,
**dadurch gekennzeichnet,**
**dass** das mindestens eine Dämpfungselement (9) auf den Polanschluss (7, 8) aufschiebbar ausgebildet ist.

3. Polbrücke (6) in Verbindung mit mindestens einem Dämpfungselement (9, 13) nach Anspruch 2,
**dadurch gekennzeichnet,**
**dass** die Auflageschulter (11) großflächig dimensioniert ist und dass das mindestens eine Dämpfungselement (9) mit einer annähernd gleichgroßen Planfläche (31) auf der Auflageschulter (11) aufliegt.

4. Polbrücke (6) in Verbindung mit mindestens einem Dämpfungselement (9, 13) nach Anspruch 1, 2 oder 3,
**dadurch gekennzeichnet,**
**dass** das mindestens eine Dämpfungselement (9) rund, oval oder mehreckig, insbesondere quadratisch geformt ist oder zumindest eine solche Auflagefläche aufweist.

5. Polbrücke (6) in Verbindung mit mindestens einem Dämpfungselement (9, 13) nach Anspruch 1, 2, 3 oder 4,
**dadurch gekennzeichnet,**
**dass** das mindestens eine Dämpfungselement (9) nach unten in Richtung auf die Polbrücke (6) konisch verjüngt ausgeführt ist.

6. Polbrücke (6) in Verbindung mit mindestens einem Dämpfungselement (9, 13) nach wenigstens einem der Ansprüche 1 bis 5,
**dadurch gekennzeichnet,**
**dass** das mindestens eine Dämpfungselement (9) aus einem elastischen Kautschukmaterial, vorzugsweise Butylkautschuk besteht, welcher eine erforderliche Formstabilität besitzt und auftretende Druckkräfte in Wärmeenergie umsetzt.

7. Polbrücke (6) in Verbindung mit mindestens einem Dämpfungselement (9, 13) nach wenigstens einem der Ansprüche 1 bis 6,
**dadurch gekennzeichnet,**
**dass** die obere Anlagefläche des mindestens einen Dämpfungselementes (9) eine Ausnehmung (33) aufweist, in welche ein Vorsprung des Gehäusedeckels (3), welcher vorzugsweise aus einem Gehäusedeckel (3) mit einem aus Gummi bestehenden Gehäuseinnendeckel (12) besteht, hineinragt.

8. Polbrücke (6) in Verbindung mit mindestens einem Dämpfungselement (9, 13) nach wenigstens einem der Ansprüche 1 bis 7,
**dadurch gekennzeichnet,**
**dass** zwischen der Auflageschulter (11) und dem mindestens einen Dämpfungselement (9) ein Dichtelement (36) angeordnet ist.

9. Polbrücke (6) in Verbindung mit mindestens einem Dämpfungselement (9, 13) nach wenigstens einem der Ansprüche 1 bis 8,
**dadurch gekennzeichnet,**
**dass** die Auflageschulter (11) innerhalb der Bleiummantelung eine Ausnehmung (20) für ein Dichtelement (36) zwischen Auflageschulter (11) und dem mindestens einen Dämpfungselement (9) aufweist.

10. Polbrücke (6) in Verbindung mit mindestens einem Dämpfungselement (9, 13) nach wenigstens einem der Ansprüche 1 bis 9,
**dadurch gekennzeichnet,**
**dass** die parallelen Dichtflächen (30, 31) des mindestens einen Dämpfungselementes (9) zumindest teilweise mit Silikonfett eingefettet sind.

11. Polbrücke (6) in Verbindung mit mindestens einem Dämpfungselement (9, 13) nach wenigstens einem der Ansprüche 1 bis 10,
**dadurch gekennzeichnet,**
**dass** das mindestens eine Dämpfungselement (9) eine Höhe von 40 bis 80 mm, vorzugsweise 60 mm aufweist.

12. Polbrücke (6) in Verbindung mit mindestens einem Dämpfungselement (9, 13) nach wenigstens einem der Ansprüche 1 bis 11,
**dadurch gekennzeichnet,**
**dass** das mindestens eine Dämpfungselement (9) eine erste Auflagefläche von 3.000 bis 4.000 mm², vorzugsweise 3.600 mm² und eine zweite Auflagefläche von 5.000 bis 7.000 mm², vorzugsweise 5.800 mm² aufweist.

13. Polbrücke (6) in Verbindung mit mindestens einem Dämpfungselement (9, 13) nach wenigstens einem der Ansprüche 1 bis 12,
**dadurch gekennzeichnet,**
**dass** der Gehäusedeckel (3) auf der Außenseite eine Ausnehmung (48) für einen Dichtungsring (13) aufweist, welcher scheibenförmig in der Ausnehmung (48) einliegt und durch welchen hindurch der Polanschluss (7, 8) nach außen ragt, wobei eine Metallscheibe auf dem Dichtungsring (13) aufliegt und mittels Sicherungsstift (16), welche in vorhandenen Ausnehmungen (20) des Polanschlusses (7, 8) einliegen, verspannt ist.

14. Polbrücke (6) in Verbindung mit mindestens einem Dämpfungselement (9, 13) nach wenigstens einem der Ansprüche 1 bis 13,
**dadurch gekennzeichnet,**
**dass** als zweites Dämpfungselement ein Dichtungsring (13) vorgesehen ist, weiches eine Höhe von 25 bis 40 mm, vorzugsweise 30 mm aufweist.

15. Polbrücke (6) in Verbindung mit mindestens einem Dämpfungselement (9, 13) nach Anspruch 14,
**dadurch gekennzeichnet,**
**dass** das zweite Dämpfungselement (13) von oben auf den Polanschluss aufschiebbar ist.

16. Polbrücke (6) in Verbindung mit mindestens einem Dämpfungselement (9, 13) nach Anspruch 14 oder 15,
**dadurch gekennzeichnet,**
**dass** der Dichtungsring (13) einen Durchmesser von 50 bis 70 mm, vorzugsweise 60 mm aufweist.

17. Polbrücke (6) in Verbindung mit mindestens einem Dämpfungselement (9, 13) nach wenigstens einem der Ansprüche 1 bis 16,
**dadurch gekennzeichnet,**
**dass** der Polanschluss (7, 8) aus Kupfer besteht.

18. Polbrücke (6) in Verbindung mit mindestens einem Dämpfungselement (9, 13) nach wenigstens einem der Ansprüche 1 bis 17,
**dadurch gekennzeichnet,**
**dass** die Polbrücke (6) und insbesondere der Bereich der Auflageschulter (11) mit Blei ummantelt ist.

19. Polbrücke (6) in Verbindung mit mindestens einem Dämpfungselement (9, 13) nach wenigstens einem der Ansprüche 1 bis 18,
**dadurch gekennzeichnet,**
**dass** der Polanschluss (7, 8) zumindest teilweise, vorzugsweise bis zur Höhe des Gehäusedeckels (3), mit Blei ummantelt ist.

## Claims

1. Cell connector (6) for a battery in connection with at least one damping element (9, 13), in particular for absorbing vertical forces occurring as a result of shock effects, wherein the cell connector (6) is at one end connected to the positive or negative electrodes (4, 5) which are accommodated in a housing (2) with a housing lid (3), and at the other end comprises at least one terminal connection (7, 8) projecting from the housing lid (3),
**characterized in that**
the at least one terminal connection (7, 8) is equipped in one piece with a support shoulder (11) integrally formed within the housing (2), wherein the at least one damping element (9) is shaped such that it rests with a smaller plane surface (31) on the support shoulder (11) and abuts with a larger plane surface (30) underneath the internal housing lid (12) of the battery.

2. Cell connector (6) in connection with at least one damping element (9, 13) according to claim 1,
**characterized in that**
the at least one damping element (9) is designed such that it can be shifted onto the terminal connection (7, 8).

3. Cell connector (6) in connection with at least one damping element (9, 13) according to claim 2,
**characterized in that**
the support shoulder (11) is large-scaled dimensioned to have a large surface and that the at least one damping element (9) rests on the support shoulder (11) with a plane surface (31) of approximately the same size.

4. Cell connector (6) in connection with at least one damping element (9, 13) according to claim 1, 2 or 3,
**characterized in that**
the at least one damping element (9) has a round, oval or polygonal, in particular square, shape or at least comprises a support surface of such a shape.

5. Cell connector (6) in connection with at least one damping element (9, 13) according to claim 1, 2, 3 or 4,
**characterized in that**
the at least one damping element (9) tapers downwards towards the cell connector (6).

6. Cell connector (6) in connection with at least one damping element (9, 13) according to at least one of claims 1 to 5,
**characterized in that**
the at least one damping element (9) consists of an elastic natural rubber material, preferably butyl rubber, which has a required dimensional stability and converts occurring compressive forces into thermal energy.

7. Cell connector (6) in connection with at least one damping element (9, 13) according to at least one of claims 1 to 6,
**characterized in that**
the upper contact surface of the at least one damping element (9) comprises a recess (33) whereby a projection of the housing lid extends into the lid (3) projects which preferably consists of a housing lid (3) with an internal housing lid (12) consisting of rubber.

8. Cell connector (6) in connection with at least one damping element (9, 13) according to at least one of claims 1 to 7,
**characterized in that**
a sealing element (36) is arranged between the support shoulder (11) and the at least one damping element (9).

9. Cell connector (6) in connection with at least one damping element (9, 13) according to at least one of claims 1 to 8,
**characterized in that**
the support shoulder (11) comprises, within the lead covering, a recess (20) for a sealing element (36) between the support shoulder (11) and the at least one damping element (9).

10. Cell connector (6) in connection with at least one damping element (9, 13) according to at least one of claims 1 to 9,
**characterized in that**
the parallel sealing surfaces (30, 31) of the at least one damping element (9) are at least partially greased with silicone grease.

11. Cell connector (6) in connection with at least one damping element (9, 13) according to at least one of claims 1 to 10,
**characterized in that**
the at least one damping element (9) has a height of 40 to 80 mm, preferably 60 mm.

12. Cell connector (6) in connection with at least one damping element (9, 13) according to at least one of claims 1 to 11,
**characterized in that**
the at least one damping element (9) has a first support surface of 3,000 to 4,000 mm², preferably 3,600 mm², and a second contact surface of 5,000 to 7,000 mm², preferably 5,800 mm².

13. Cell connector (6) in connection with at least one damping element (9, 13). according to at least one of claims 1 to 12,
**characterized in that**
the housing lid (3) comprises a recess (48) for a sealing ring (13) at the exterior, which lies like a disk in the recess (48) and through which the terminal connection (7, 8) projects outside, wherein a metal disk rests on the sealing ring (13) and is braced by means of a locking pin (16) which lies in existing recesses (20) of the terminal connection (7, 8).

14. Cell connector (6) in connection with at least one damping element (9, 13) according to at least one of claims 1 to 13,
**characterized in that**
a sealing ring (13) is provided as second damping element which has a height of 25 to 40 mm, preferably 30 mm.

15. Cell connector (6) in connection with at least one damping element (9, 13) according to claim 14,
**characterized in that**
the second damping element (13) can be shifted onto the terminal connection from above.

16. Cell connector (6) in connection with at least one damping element (9, 13) according to claim 14 or 15,
**characterized in that**
the sealing ring (13) has a diameter of 50 to 70 mm, preferably 60 mm.

17. Cell connector (6) in connection with at least one damping element (9, 13) according to at least one of claims 1 to 16,
**characterized in that**
the terminal connection (7, 8) consists of copper.

18. Cell connector (6) in connection with at least one damping element (9, 13) according to at least one of claims 1 to 17,
**characterized in that**
the cell connector (6) and in particular the area of the support shoulder (11) are covered with lead.

19. Cell connector (6) in connection with at least one damping element (9, 13) according to at least one of claims 1 to 18,
**characterized in that**
the terminal connection (7, 8) is at least partially, preferably to the height of the housing lid (3), covered with lead.

## Revendications

1. Pontet de connexion (6) destiné à une batterie en combinaison avec au moins un élément d'amortissement (9, 13), notamment conçu pour absorber des forces verticales se produisant à la suite de chocs, le pontet de connexion (6) étant relié à une extrémité aux électrodes positives ou négatives (4, 5), qui sont logées dans un boîtier (2) pourvu d'un couvercle (3), et présentant à l'autre extrémité au moins une connexion de pôle (7, 8) faisant saillie hors du couvercle (3),
**caractérisé par le fait qu'**au moins une connexion de pôle (7, 8) est équipée d'un épaulement d'appui (11) formé d'un seul tenant au sein du boîtier (2), au moins un élément d'amortissement (9) étant formé de telle manière qu'il s'appuie sur l'épaulement d'appui (11) à l'aide d'une surface plane de plus petite dimension (31) et est appliquée à l'aide d'une surface plane de plus grande dimension (30) en dessous du couvercle interne de boîtier (12) de la batterie.

2. Pontet de connexion (6) en combinaison avec au moins un élément d'amortissement (9, 13) selon la revendication 1,
**caractérisé par le fait qu'**au moins un élément d'amortissement (9) est réalisé comme étant enfichable sur la connexion de pôle (7, 8).

3. Pontet de connexion (6) en combinaison avec au moins un élément d'amortissement (9, 13) selon la revendication 2,
**caractérisé par le fait qu'**épaulement d'appui (11) présente une surface importante et qu'au moins un élément d'amortissement (9) s'appuie sur l'épaulement d'appui (11) à l'aide d'une surface plane (31) de dimension approximativement identique.

4. Pontet de connexion (6) en combinaison avec au moins un élément d'amortissement (9, 13) selon la revendication 1, 2 ou 3,
**caractérisé par le fait qu'**au moins un élément d'amortissement (9) est de forme ronde, ovale ou polygonale, en particulier carré ou présente au moins une telle surface d'appui.

5. Pontet de connexion (6) en combinaison avec au moins un élément d'amortissement (9, 13) selon la revendication 1, 2, 3 ou 4,
**caractérisé par le fait qu'**au moins un élément d'amortissement (9) est réalisé en se rétrécissant de manière conique vers le bas dans la direction du pontet de connexion (6).

6. Pontet de connexion (6) en combinaison avec au moins un élément d'amortissement (9, 13) selon au moins une des revendications 1 à 5,
**caractérisé par le fait qu'**au moins un élément d'amortissement (9) est constitué d'un matériau de caoutchouc élastique, préférentiellement de caoutchouc de butyle, qui possède une stabilité dimensionnelle nécessaire et transforme les forces de compression en énergie thermique.

7. Pontet de connexion (6) en combinaison avec au moins un élément d'amortissement (9, 13) selon au moins une des revendications 1 à 6,
**caractérisé par le fait que** la surface de contact d'au moins un élément d'amortissement (9) présente un évidement (33) dans lequel s'enfonce une saillie du couvercle de boîtier (3) constitué préférentiellement d'un couvercle de boîtier (3) muni d'un couvercle interne de boîtier (12) constitué de caoutchouc.

8. Pontet de connexion (6) en combinaison avec au moins un élément d'amortissement (9, 13) selon au moins une des revendications 1 à 7,
**caractérisé par le fait qu'**un élément d'étanchéité (36) est disposé entre l'épaulement d'appui (11) et au moins un élément d'amortissement (9).

9. Pontet de connexion (6) en combinaison avec au moins un élément d'amortissement (9, 13) selon au moins une des revendications 1 à 8,
**caractérisé par le fait que** l'épaulement d'appui (11) présente au sein de la gaine en plomb un évidement (20) prévu pour un élément d'étanchéité (36) entre l'épaulement d'appui (11) et au moins un élément d'amortissement (9).

10. Pontet de connexion (6) en combinaison avec au moins un élément d'amortissement (9, 13) selon au moins une des revendications 1 à 9,
**caractérisé par le fait que** les surfaces d'étanchéité parallèles (30, 31) d'au moins un élément d'amortissement (9) sont graissées au moins partiellement à l'aide de graisse silicone.

11. Pontet de connexion (6) en combinaison avec au moins un élément d'amortissement (9, 13) selon au moins une des revendications 1 à 10,
**caractérisé par le fait qu'**au moins un élément d'amortissement (9) présente une hauteur de 40 à 80 mm, préférentiellement 60 mm.

12. Pontet de connexion (6) en combinaison avec au moins un élément d'amortissement (9, 13) selon au moins une des revendications 1 à 11,
**caractérisé par le fait qu'**au moins un élément d'amortissement (9) présente une première surface d'appui de 3.000 à 4.000 mm², préférentiellement 3.600 mm² et une seconde surface d'appui de 5.000 à 7.000 mm², préférentiellement 5.800 mm².

13. Pontet de connexion (6) en combinaison avec au moins un élément d'amortissement (9, 13) selon au moins une des revendications 1 à 12,
**caractérisé par le fait que** le couvercle de boîtier (3) présente sur la face externe un évidement (48) prévu pour un joint d'étanchéité (13), qui se loge en forme de disque dans l'évidement (48) et à travers lequel la connexion de pôle (7, 8) fait saillie vers l'extérieur, une rondelle métallique s'appuyant sur le joint d'étanchéité (13) et est tendue au moyen d'une goupille de sécurité (16) se logeant dans les évidements (20) existants du connexion de pôle (7, 8).

14. Pontet de connexion (6) en combinaison avec au moins un élément d'amortissement (9, 13) selon au moins une des revendications 1 à 13,
**caractérisé par le fait qu'**un joint d'étanchéité (13) est prévu en tant que second élément d'amortissement, présentant une hauteur de 25 à 40 mm, préférentiellement 30 mm.

15. Pontet de connexion (6) en combinaison avec au moins un élément d'amortissement (9, 13) selon la revendication 14,
**caractérisé par le fait que** le second élément d'amortissement (13) est enfichable par le dessus sur la connexion de pôle.

16. Pontet de connexion (6) en combinaison avec au moins un élément d'amortissement (9, 13) selon la revendication 14 ou 15,
**caractérisé par le fait que** le joint d'étanchéité (13) présente un diamètre de 50 à 70 mm, préférentiellement 60 mm.

17. Pontet de connexion (6) en combinaison avec au moins un élément d'amortissement (9, 13) selon au moins une des revendications 1 à 16,
**caractérisé par le fait que** la connexion de pôle (7, 8) est constituée de cuivre.

18. Pontet de connexion (6) en combinaison avec au moins un élément d'amortissement (9, 13) selon au moins une des revendications 1 à 17,
**caractérisé par le fait que** le pontet de connexion (6) et en particulier la zone d'épaulement d'appui (11) est enrobée de plomb.

19. Pontet de connexion (6) en combinaison avec au moins un élément d'amortissement (9, 13) selon au moins une des revendications 1 à 18,
**caractérisé par le fait que** la connexion de pôle (7, 8) est enrobée de plomb au moins partiellement, préférentiellement jusqu'à la hauteur du couvercle de boîtier (3).
